# EUROPÄISCHE PATENTANMELDUNG

(11) **EP 0 957 550 A1**
(43) Veröffentlichungstag der Anmeldung: **17.11.1999**
(21) Anmeldenummer: 99107264.6
(22) Anmeldetag: 15.04.1999
(51) Int. Cl.: H02G 3/04

(54) **Installationskanal**

(30) Priorität: 17.04.1998 DE 29806896 U
(71) Anmelder: MiniTec GmbH Linearantriebseinheiten Alu-Montagesysteme, 66914 Waldmohr (DE)
(72) Erfinder: Bauer, Bernhard, 66901 Schönenberg (DE)
(74) Vertreter: Klein, Friedrich

(57) **Zusammenfassung**

Die Erfindung betrifft einen Installationskanal mit einem Grundteil und einem Deckel, die einen Hohlraum zur Aufnahme von Kabeln, Schläuchen oder sonstigen Leitungen umschließen, wobei das Grundteil (1) und der Deckel (2) mittels Scharnieren (9) miteinander verbunden sind, deren Schwenkachsen (10) parallel zur Längsrichtung von Grundteil (1) und Deckel (2) gerichtet sind.

## Beschreibung

Die Erfindung betrifft einen Installationskanal mit einem Grundteil und einem Deckel, die einen Hohlraum zur Aufnahme von Kabeln, Schläuchen oder sonstigen Leitungen umschließen.

Zur Verlegung von Kabeln, Schläuchen oder sonstigen Leitungen sind Installationskanäle bekannt, die ein im wesentlichen U-förmiges Grundteil und ein Deckelteil aufweisen. Dabei dient der vom U-förmigen Grundteil umschlossene Hohlraum zur Aufnahme der Kabel, die in bestimmten Abständen mit sog. Kabelbindern zusammengehalten werden. Die Kabel liegen dabei entweder lose innerhalb des vom Grundteil umschlossenen Hohlraumes, oder sie werden mittels den Kabelbindern im Grundteil befestigt.

Um den Deckel des Installationskanals am Grundteil lösbar befestigen zu können, sind die freien Enden der Schenkel des Grundteiles zur Bildung einer Nut etwas nach innen abgekröpft. In die an der Außenseite eines jeden der Schenkel des Grundteiles der so gebildeten Nuten greifen am Deckel des Installationskanals ausgebildete Haltenasen, die beim Aufsetzen des Deckels auf das Grundteil kraftschlüssig in die Nuten einschnappen.

Da beim Öffnen des Installationskanals Grundteil und Deckel voneinander gelöst werden, geht die längenbezogene Relativlage beim Öffnen desselben verloren, sodaß zum Schließen des Installationskanals diese Relativlage wieder hergestelt werden muß. Aufgrund des Einschnappens der am Deckel ausgebildeten Haltenasen in die am Grundteil vorgesehenen Nuten, läßt sich bei auf das Grundteil aufgebrachtem Deckel die Relativlage von Grundteil und Deckel im allgemeinen nicht mehr verändern. Daher ist es notwendig, schon beim Ansetzen des Deckels am Grundteil die richtige Relativlage derselben herzustellen. Dies ist jedoch insbesondere dann, wenn es sich beispielsweise um relativ lange Installationskanäle handelt, die an einer Decke angebracht werden müssen, relativ schwierig und erfordert oft den Einsatz von zwei Personen.

Der Erfindung liegt daher die Aufgabe zu Grunde, einen gattungsgemäßen Installationskanal derart weiter zu bilden, daß bei dessen Schließen die Relativlage von Grundteil und Deckel leicht wieder hergestellt und somit auf den Einsatz einer zweiten Person hierfür verzichtet werden kann.

Ausgehend von einem gattungsgemäßen Installationskanal wird diese Aufgabe dadurch gelöst, daß das Grundteil und der Deckel mittels Scharnieren miteinander verbunden sind, deren Schwenkachsen parallel zur Längsrichtung von Grundteil und Deckel gerichtet sind.

Durch die scharniermäßige Verbindung von Grundteil und Deckel bleiben beide beim Öffnen des Installationskanals miteinander verbunden und somit bleibt die längenbezogene Relativlage der beiden auch bei geöffnetem Installationskanal erhalten. Der Installationskanal kann daher auch von nur einer Person ohne jegliche Schwierigkeit wieder verschlossen werden.

Eine freie Zugänglichkeit der im Installationskanal verlegten Kabel ergibt sich bei geöffnetem Deckel dadurch, daß der Hohlraum im wesentlichen vom Deckel umschlossen ist.

Eine in konstruktiver Hinsicht äußerst einfache und von der jeweiligen Länge des Installationskanals unhabhängige Befestigung der am Grundteil anzubringenden Scharnierteile wird dadurch erreicht, daß das Grundteil einen im wesentlichen prismatischen Querschnitt aufweist und zur Aufnahme von Befestigungsmitteln für seine Scharnierteile an einer seiner Längsseiten mit einer Längsnut versehen ist, die einen im wesentlichen T-förmigen Querschnitt aufweist.

Zur hierzu analogen Befestigung der am Deckel anzuordnenden Scharnierteile weist dieser einen im wesentlichen U-förmigen Querschnitt auf, wobei zur Aufnahme von Befestigungsmitteln für seine Scharnierteile einer seiner Schenkel mit einer Längsnut versehen ist, die einen im wesentlichen T-förmigen Querschnitt aufweist.

Zur Stabilisierung der Form des Deckels, sowie zur Bildung einer Anschlagfläche für diesen am Grundteil, ist es vorteilhaft, wenn das freie Ende eines der Schenkel des Deckels seinerseits im wesentlichen die Form eines U mit zur Oberseite des Grundteiles parallel gerichtetem Steg aufweist, und am freien Ende des Schenkels dieses U eine Druckfläche ausgebildet ist, die mit am Grundteil befestigten elastischen Widerlagern zusammenwirkt.

Eine hinsichtlich ihrers in Längsrichtung des Installationskanals gegenseitigen Abstandes variable Anordnung der Widerlager ergibt sich dadurch, daß das Grundteil zur Aufnahme der Widerlager im Bereich seiner dem Deckel zugekehrten Oberseite mit Längsnuten mit im wesentlichen T-förmigem Querschnitt versehen ist, und jedes der Widerlager ein in den Längsnuten befestigbares Sockelteil aufweist.

Um die Widerlager gleichzeitig als Kabelschellen benützen zu können, weisen diese jeweils zwei divergierende Arme auf, die zur Befestigung jeweils eines die Kabel umschlingenden Bandes dienen.

Um die Anzahl der zu einem Bündel zusammen gehaltenen Kabel zu erhöhen, können die Widerlager jeweils paarweise in seitlichem Abstand zueinander angeordnet sein, wobei ihr jeweils äußerer Arm als Gegenlager für ein die Kabel umgreifendes Band dient.

Eine vorteilhafte Führung des Bandes, die das Anliegen des Deckels am jeweiligen Widerlager nicht beeinträchtigt, kann dadurch erreicht werden, daß die Arme des Widerlagers im Bereich ihrer Außenseite eine Nut zur Aufnahme des Bandes und im Bereich ihrer Aufsetzfläche auf das Grundteil eine zu ihrer Längsachse quer gerichtete Ausnehmung zum Durchtritt des Bandes aufweisen.

Weitere Vorteile und Einzelheiten der Erfindung ergeben sich aus der nachfolgenden Beschreibung eines in der Zeichnung dargestellten Ausführungsbeispieles derselben.

Es zeigen:
- Fig. 1:: eine schaubildliche Darstellung eines Installationskanals;
- Fig. 2:: einen Querschnitt durch einen Installationskanal;
- Fig. 3:: eine Detaildarstellung eines Widerlagers;
- Fig. 4:: einen Querschnitt durch den Sockel eines Widerlagers;
- Fig. 5:: eine Darstellung weiterer Möglichkeiten der Anordnung des Bandes;

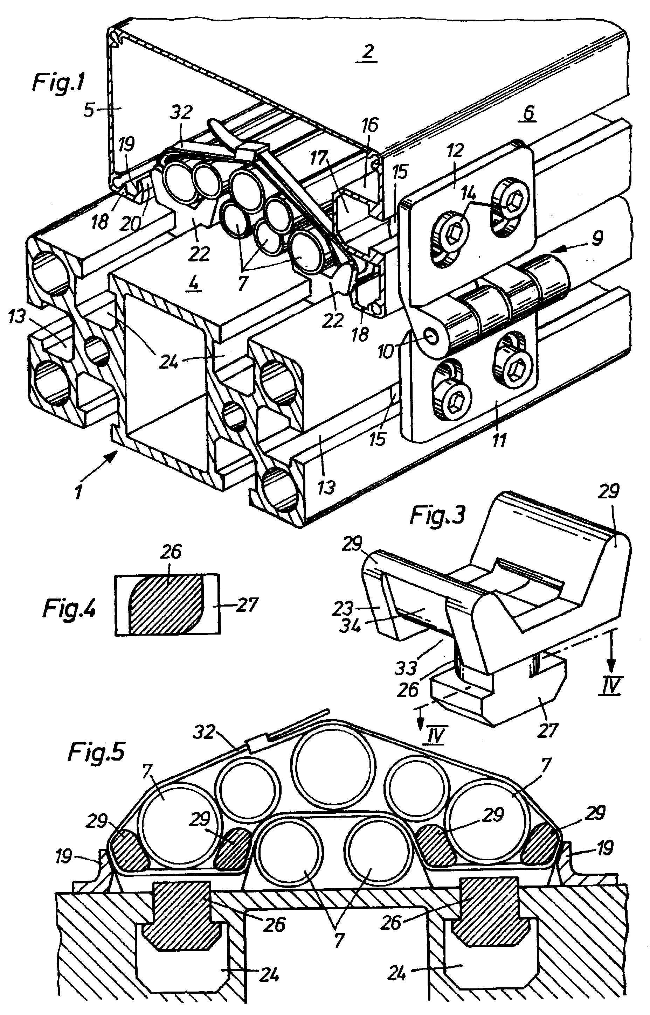

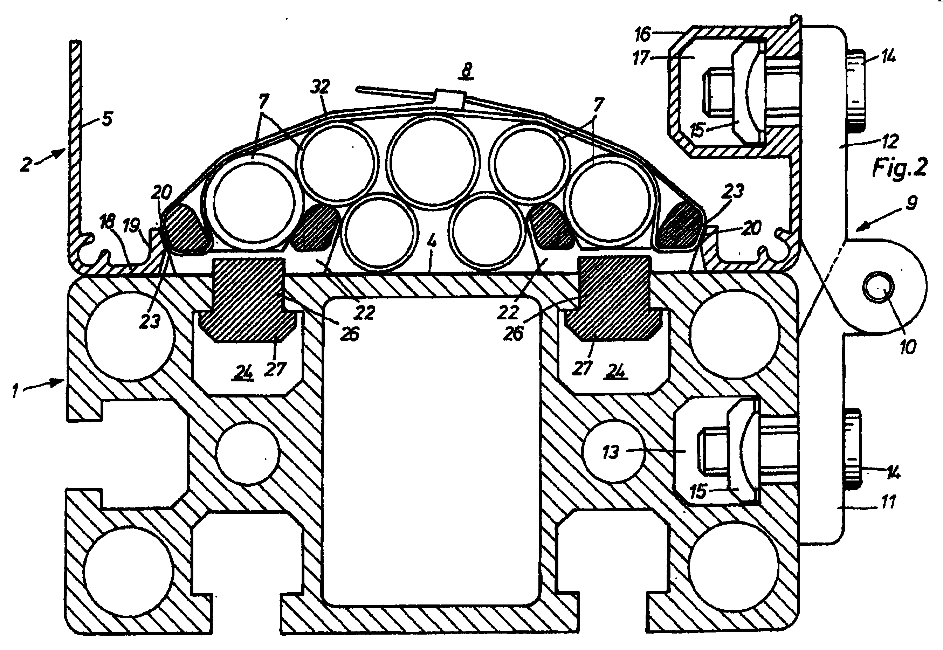

Der in Fig. 1 dargestellte Installationskanal weist ein Grundteil 1 mit einem im wesentlichen prismatischen Querschnitt auf. Dem Grundteil 1 ist ein Deckel 2 zugeordnet, der einen im wesentlichen U-förmigen Querschnitt aufweist. Die Anordung des Deckels 2 ist so getroffen, daß der Steg 3 des U parallel zur Oberseite 4 des Grundteiles 1 verläuft, und seine beiden Schenkel 5,6 senkrecht zu dieser gerichtet sind. Der zur Aufnahme der Kabel 7 oder sonstigen Leitungen dienende Hohlraum 8 wird daher im wesentlichen vom Deckel 2 umschlossen und durch die Oberseite 4 des Grundteiles 1 begrenzt.

Das Grundteil 1 und der Deckel 2 sind durch mehrere Scharniere 9 miteinander verbunden, deren Schwenkachsen 10 im wesentlichen parallel zur Längsrichtung des Installationskanals verlaufen. Jedes der Scharniere 9 wird von einem Unterteil 11 und einem Oberteil 12 gebildet. Zur Befestigung der Unterteile 11 am Grundteil 1 weist dieses eine T-förmige Längsnut 13 auf, die so bemessen ist, daß die Schrauben 14 zugeordneten Muttern 15 zwar an beliebiger Stelle in die Längsnut 13 eingeführt werden können, sie sich aber innerhalb der Längsnut 13 nicht drehen können.
Die Befestigung der Oberteile 12 der Scharniere 9 am Deckel 2 erfolgt in analoger Weise. Der Deckel 2, dessen Schenkel 6 in dem entsprechenden Bereich einen Ansatz 16 aufweist, ist hierzu mit einer der Längsnut 13 entsprechenden Längsnut 17 versehen, die in analoger Weise zur Aufnahme von Muttern 15 dient. Aufgrund dieser Anordnung können die Scharniere 9 entlang des Installationskanals an jeder beliebiegen Stelle angebracht werden.

Wie aus den Figuren 1 und 2 ersichtlich ist, sind die freien Enden der Schenkel 5,6 des Deckels 2 jeweils U-förmig abgebogen, wobei der Steg 18 des so gebildeten U parallel zur Oberseite 4 des Grundkörpers 1 verläuft und am freien Ende des jeweils nach aufwärts gerichteten Schenkels 19 eine Druckfläche 20 ausgebidet ist.

Die sich über die gesamte Länge des Installationskanals ertreckenden Druckflächen 20, wirken mit Widerlagern 22 zusammen, die am Grundteil 1 befestigt sind.
Die Widerlager 22 sind elastisch ausgebildet und weisen jeweils eine mit den Druckflächen 20 zusammenwirkende Druckfläche 23 auf. Die Druckflächen 20 und 23 sind -wie Fig. 2 zeigt- in der Schließlage des Deckels 2 zueinander parallel und schräg nach aufwärts gerichtet. Ihre gegenseitige Zuordnung ist so getroffen, daß beim Schließen des Deckels 2 dessen Druckflächen 20 die Druckflächen 23 der Widerlager 22 jeweils zum Inneren des Deckels 2 drücken und hierdurch dessen Schließlage gesichert wird.

Zur Aufnahme der Widerlager 22 weist das Grundteil 1 im Bereich seiner dem Deckel 2 zugekehrten Oberseite 4 zwei sich über die gesamte Länge des Installationskanals erstreckende und parallel zueinander gerichtete Längsnuten 24 mit jeweils einem im wesentlichen T-förmigen Querschnitt auf.

Die in Fig. 3 im Detail dargestellten Widerlager 22 weisen ein Sockelteil 25 auf, das einen Steg 26 und einen Fuß 27 umfaßt. Die Höhe des Steges 26 entspricht der Höhe der vorspringenden Wangen 28 Längsnuten 24; der Steg 26 weist einen rechteckförmigen Querschnitt auf, wobei zwei einander gegenüberliegende Ecken des Steges leicht gerundet sind. Der sich an den Steg 26 anschließende Fuß 27 weist einen ebenfalls rechteckförmigen Querschnitt auf, wobei die Schmalseite des Rechteckes ungefähr dem gegenseitigen Abstand der beiden der Wangen 28 entspricht und die Längsseite etwas kleiner als die größte Breite der T-förmigen Längsnuten 24 ist. Das Widerlager 22 läßt sich daher mit zur Längsnut 24 parallel gerichteter Schmalseite in diese einführen und sich dann durch eine etwa 90 Grad umfassende Drehung in ihr verrasten.

Auf diese Art und Weise können auch die Widerlager 22 entlang der gesamten Länge des Installationskanals an jeder beliebigen Stelle desselben positioniert und befestigt werden.
Beim gezeigten Ausführungsbeispiel weist das Grundteil 1 zwei im Abstand zueinander angeordnete Längsnuten 24 auf. Hierdurch lassen sich die Widerlager 22 paarweise einander gegenüberliegend am Grundteil 1 anordnen. Bei demgegenüber schmäler ausgeführtem Installationskanal ist es ohne weiteres möglich, auf eine der Längsnuten 24 zu verzichten und die Widerlager 22 dann nur in einer Reihe anzuordnen.

Wie aus Fig. 3 weiter hervorgeht, sind die Widerlager 22 mit zwei divergierenden Armen 29, versehen, an deren jeweiliger Außenseite die Druckflächen 23 ausgebildet sind. Die Widerlager 22 erfüllen hierdurch gleichzeitig die Funktion von Kabelschellen, wobei die einzelnen Kabel 7 mittels eines sie umgreifenden Bandes 32 zu einem Bündel zusammengefaßt und am jeweiligen Widerlager 22 befestigt werden können. Vorteilhafter Weise wird als Band hierbei ein handelsüblicher Kabelbinder verwendet.

Im Fall der Verwendung von einander paarweise gegenüberliegenden Widerlagern 22 ist es auch möglich, sämtliche Kabel mittels eines Bandes 32 zu einem einzigen Bündel zusammen zu fassen und dieses Bündel an jeweils zwei einander paarweise gegenüberliegenden Widerlagern 22 zu befestigen, oder zwei Kabelbündel zu bilden und jedes dieser Kabelbündel an einem der Widerlager 22 zu befestigen. Dies kann insbesondere dann von Vorteil sein, wenn beispielsweise Kabel und Schlauchleitungen im Installationskanal aufzunehmen und diese nach Funktionsgruppen zu trennen sind.

Die Widerlager 22 weisen hierzu im unteren Bereich der Arme 29 eine sie quer zur Längsrichtung des Installationskanals durchsetzende Ausnehmung 33 auf, so daß das Band 32 unterhalb der Arme 29 quer durch das Widerlager 22 geführt werden kann. Da das Band hierbei auch über die als Druckflächen 23 dienende Außenseiten der Arme geführt werden muß, und dadurch innerhalb der Druckfläche 23 eine Unebenheit entstehen würde, ist in die Druckflächen 23 eine das Band in diesem Bereich aufnehmende Nut 34 eingearbeitet, deren Tiefe etwas größer als die Dicke des Bandes 32 ist.

Eine erste Möglichkeit der Führung des Bandes 32 ist in den Fig. 1 und 2 gezeigt. Hier umgreift das Band 32 jeweils nur einen der Arme 29 des jeweiligen Widerlagers 22, sodaß sämtliche Kabel 7 zusammengeschnürt sind.

Demgegenüber zeigt die Fig. 5 eine Führung des Bandes 32, bei der die beiden zwischen den Widerlagern 22 liegenden Kabel von den übrigen Kabeln getrennt verschnürt sind. Eine derartige Führung des Bandes 32 bietet sich dann an, wenn es sich bei den zwischen den Widerlagern 22 liegenden Leitungen nicht um elektrische Kabel, sondern um ein bestimmtes Medium, beispielsweise Druckluft führende Leitungen handelt.

Selbstverständlich ist es auch möglich, in der Art zwei Bündel bzw Gruppen von Kabeln zu bilden, daß insgesamt zwei Bänder vorgesehen werden, von ein Band 32 um das -bezogen auf die Fig. 2 und 5 - linke Widerlager 22 geführt ist und das andere Band 32 um das rechte Widerlager 22 geführt ist.

## Patentansprüche

**1**. Installationskanal mit einem Grundteil und einem Deckel, die einen Hohlraum zur Aufnahme von Kabeln, Schläuchen oder sonstigen Leitungen umschließen, **dadurch gekennzeichnet**,
daß das Grundteil (1) und der Deckel (2) mittels Scharnieren (9) miteinander verbunden sind, deren Schwenkachsen (10) parallel zur Längsrichtung von Grundteil (1) und Deckel (2) gerichtet sind.

**2**. Installationskanal nach Anspruch 1, **dadurch gekennzeichnet**,
daß der Hohlraum (8) im wesentlichen vom Deckel (2) umschlossen ist.

**3**. Installationskanal nach Anspruch 1, **dadurch gekennzeichnet**,
daß das Grundteil (1) einen im wesentlichen prismatischen Querschnitt aufweist und zur Aufnahme von Befestigungsmitteln (14,15) für seine Scharnierteile (11) an einer seiner Längsseiten mit einer Längsnut (13) versehen ist, die einen im wesentlichen T-förmigen Querschnitt aufweist.

**4**. Installationskanal nach Anspruch 1, **dadurch gekennzeichnet**,
daß der Deckel (2) einen im wesentlichen U-förmigen Querschnitt aufweist und zur Aufnahme von Befestigungsmitteln (14,15) für seine Scharnierteile (12) an einem seiner Schenkel (6) mit einer Längsnut (17) versehen ist, die einen im wesentlichen T-förmigen Querschnitt aufweist.

**5**. Installationskanal nach einem oder mehreren der vorangehenden Ansprüche, **dadurch gekennzeichnet**,
daß das freie Ende mindestens eines der Schenkel (5,6) des Deckels (2) seinerseits im wesentlichen die Form eines U mit zur Oberseite (4) des Grundteiles (1) parallel gerichtetem Steg (18) aufweist und am freien Ende des Schenkels (19) dieses U eine Druckfläche (20) ausgebildet ist, die mit am Grundteil (1) befestigten Widerlagern (22) zusammenwirkt.

**6**. Installationskanal nach einem oder mehreren der vorangehenden Ansprüche, **dadurch gekennzeichnet**,
daß die freien Enden beider Schenkel (5,6) des Deckels (2) ihrerseits im wesentlichen die Form eines U mit zur Oberseite (4) des Grundteiles (1) parallel gerichtetem Steg aufweisen und an den freien Enden der Schenkel (19) dieses U jeweils eine Druckfläche (20) ausgebildet ist, die mit am Grundteil (1) in seitlichem Abstand zueinander angeordneten Widerlagern (22) zusammenwirken.

**7**. Installationskanal nach Anspruch 5 oder 6, **dadurch gekennzeichnet**,
daß die Widerlager (22) elastisch verformbar sind.

**8**. Installationskanal nach einemn oder mehreren der vorangehenden Ansprüche **dadurch gekennzeichnet**,
daß das Grundteil (1) zur Aufnahme der Widerlager (22) im Bereich seiner dem Deckel (2) zugekehrten Oberseite (4) mit Längsnuten (24) mit im wesentlichen T-förmigem Querschnitt versehen ist und jedes der Widerlager (22) ein in den Längsnuten (24) befestigbares Sockelteil (25) aufweist.

**10**. Installationskanal nach einem oder mehreren der vorangehenden Ansprüche, **dadurch gekennzeichnet**,
daß die Widerlager (22) als Kabelschellen ausgebidet sind und hierzu jeweils zwei divergierende Arme (29) aufweisen, die zur Befestigung jeweils eines die Kabel (7) umgreifenden Bandes (32) dienen.

**11**. Installationskanal nach einem oder mehreren der vorangehenden Ansprüche, **dadurch gekennzeichnet**,
daß die Widerlager (22) jeweils paarweise in seitlichem Abstand zueinander angeordnet sind und ihr jeweils äußerer Arm (29) als Gegenlager für ein die Kabel umgreifendes Band (32) dient.

**12**. Installationskanal nach einem oder mehreren der vorangehenden Ansprüche, **dadurch gekennzeichnet**,
daß die Arme (29) des Widerlagers (22) im Bereich ihrer Außenseite eine Nut (34) zur Aufnahme des Bandes (32) aufweisen.

**13**. Installationskanal nach einem oder mehreren der vorangehenden Ansprüche, **dadurch gekennzeichnet,**
daß die Widerlager (22) im unteren Bereich der Arme (29) eine zu ihrer Längsachse quer gerichtete Ausnehmung (33) zum Durchtritt des Bandes (32) aufweisen.

**14**. Installationskanal nach einem oder mehreren der vorangehenden Ansprüche, **dadurch gekennzeichnet**,
daß das Band (32) ein handelsüblicher Kabelbinder ist.
